# DEMANDE DE BREVET EUROPEEN

(11) **EP 1 232 939 A1**
(43) Date de publication de la demande: **21.08.2002**
(21) Numéro de dépôt: 02290355.3
(22) Date de dépôt: 13.02.2002
(51) Int. Cl.: B62K 5/04, B62K 19/46, B62K 7/02

(54) **Dispositif de transport de marchandises**

(30) Priorité: 16.02.2001 FR 0102168
(71) Demandeur: BCF HOLDING, 75011 Paris (FR)
(72) Inventeur: Quenedey, Jean-Patrice, Cabinet Ballot, 92593 Levallois-Perret Cedex (FR)
(74) Mandataire: Ballot, Paul

(57) **Abrégé**

L'invention concerne un dispositif de transport de marchandises (7) caractérisé en ce qu'il comprend un tricycle à moteur (1), une nacelle (8) pour stocker de la marchandise, ladite nacelle (8) étant fixée rigidement d'une part, à l'arrière du châssis du tricycle à moteur (1) par l'intermédiaire de barres de liaison (10) et, d'autre part, à l'avant du châssis du tricycle à moteur (1) par l'intermédiaire de deux barres de retour de force (12, 13).

## Description

La présente invention concerne un dispositif fonctionnel de tricycle à moteur pour le transport de marchandises, et plus particulièrement l'objet de la présente invention est de proposer un dispositif faisant office à la fois de nacelle de stockage pour le transport des marchandises et à la fois de toit pour le tricycle à moteur, l'ensemble étant fixé rigidement au châssis du tricycle.

Un tel dispositif selon l'invention est destiné à améliorer la livraison rapide à domicile de marchandises, notamment des denrées alimentaires, en zone urbaine.

En effet, pour assurer la livraison rapide de marchandises en zone urbaine, des engins motorisés légers tels que des mobylettes, des scooters ou encore des tricycles à moteur sont souvent employés puisque leur faible empâtement permet à leurs utilisateurs de s'affranchir des contraintes de circulation et spécialement des embouteillages qui sévissent dans le centre des grandes villes.

Cependant, si ces engins motorisés légers à deux ou trois roues procurent un gain de temps important au cours des déplacements urbains pour les raisons exposées ci-dessus qui tiennent essentiellement à leur taille, la capacité de stockage qu'offrent les équipements fonctionnels adaptés sur ces engins pour assurer le transport des marchandises est très limitée.

En effet, il est connu dans l'art antérieur de transporter des marchandises et notamment des denrées alimentaires sur des engins motorisés légers du type précité au moyen de conteneurs souvent de forme parallélépipédique qui sont fixés sur le porte-bagage à l'arrière de l'engin.

Or, de tels conteneurs n'offrent qu'un faible volume de stockage afin de ne pas risquer de déséquilibrer le véhicule léger sur lequel il est porté.

Ainsi, malgré la commodité d'utilisation des véhicules légers motorisés à deux ou trois roues en circulation urbaine à forte densité, la faible capacité de stockage proposée limite l'usage de tels engins pour la livraison de marchandises à domicile dans beaucoup de situation.

Par exemple, pour la livraison de produits frais qui nécessite de respecter strictement la chaîne du froid, le conteneur porté par le véhicule léger peut être doté de moyens isolants, mais la trop faible capacité de stockage rend cet investissement onéreux dans le contexte de la livraison à domicile par des véhicules motorisés légers à deux ou trois roues.

La livraison de produits frais à domicile est donc effectuée au moyen de camion ou camionnettes munis d'une chambre froide et où le volume de stockage est suffisamment important pour rentabiliser leur usage.

Cependant, ces véhicules ne sont pas du tout adaptés aux conditions de circulation des centre-villes et leur progression est fortement tributaire des embouteillages, ce qui fait que les marchandises sont livrées à domicile souvent avec beaucoup de retard.

C'est en conséquence un objet de la présente invention de fournir une structure de conteneur d'objets dans un véhicule léger motorisé à trois roues du type tricycle à moteur avec un volume de stockage important comparé aux conteneurs conventionnels adaptés pour de tels véhicules légers.

A cet effet, l'invention prévoit de mettre en oeuvre une structure fixée rigidement à la fois sur l'arrière et sur l'avant de châssis du triporteur. La structure est prévue pour être escamotable et est d'un montage simple et rapide.

L'invention concerne donc un dispositif de transport de marchandises caractérisé en ce qu'il comprend un tricycle à moteur, une nacelle pour stocker de la marchandise, ladite nacelle étant fixée rigidement d'une part, à l'arrière du châssis du tricycle à moteur par l'intermédiaire de barres de liaison et, d'autre part, à l'avant du châssis du tricycle à moteur par l'intermédiaire de deux barres de retour de force.

En plus de la première caractéristique mentionnée ci-dessus, la présente invention a une seconde caractéristique en ce que la nacelle est formée par une structure de support constituée de tubes assemblés solidairement les uns aux autres de façon à former un parallélépipède rectangle.

En plus de la première caractéristique mentionnée ci-dessus, la présente invention a une troisième caractéristique en ce que la nacelle est disposée en porte-à-faux par rapport à l'axe des roues arrières du tricycle à moteur.

En plus de la première caractéristique mentionnée ci-dessus, la présente invention a une quatrième caractéristique en ce que les barres de liaison sont fixées solidairement d'une part, à l'arrière du châssis du tricycle à moteur et, d'autre part, à la partie inférieure de la nacelle.

En plus de la première caractéristique mentionnée ci-dessus, la présente invention a une cinquième caractéristique en ce que les barres de retour de force sont fixées solidairement d'une part, à l'avant du châssis du tricycle à moteur et, d'autre part, à la partie supérieure de la nacelle par l'intermédiaire de moyens d'assemblage.

En plus de la première caractéristique mentionnée ci-dessus, la présente invention a une sixième caractéristique en ce que les moyens d'assemblage pour assembler solidairement la partie supérieure de la nacelle aux barres de retour de force comprennent des douilles de type mâle, chacune des douilles étant fixée solidairement aux coins supérieurs de la face avant de la nacelle, lesdites barres de retour de force étant alors constituées de tubes creux.

En plus de la première caractéristique mentionnée ci-dessus, la présente invention a une septième caractéristique en ce que les barres de retour de force comprennent des moyens pour accueillir un pare-brise de façon à former un toit pour le tricycle à moteur.

En plus de la première caractéristique mentionnée ci-dessus, la présente invention a une huitième caractéristique en ce que les moyens pour acceuillir un pare-brise comprennent une glissière dotée d'un joint fixée solidairement le long de chacune des barres de retour de force.

En plus de la première caractéristique mentionnée ci-dessus, la présente invention a une neuvième caractéristique en ce que le pare-brise est constitué d'une plaque en plexiglas.

En plus de la première caractéristique mentionnée ci-dessus, la présente invention a une dixième caractéristique en ce que les tubes constituant la nacelle (8) et les barres de retour de force (12, 13) sont en matériau métallique ou plastique.

D'autres caractéristiques et avantages de la présente invention apparaîtront plus clairement à la lecture de la description suivante d'un exemple de réalisation en référence aux figures dans lesquelles :
- la figure 1 est une vue d'ensemble d'un tricycle à moteur ou triporteur muni du dispositif fonctionnel selon l'invention ;
- la figure 2 est une vue en perspective de la partie arrière du dispositif fonctionnel selon l'invention formant une nacelle de stockage ;
- la figure 3 est une vue en perspective de la partie avant du dispositif fonctionnel selon l'invention formant un toit pour le triporteur.

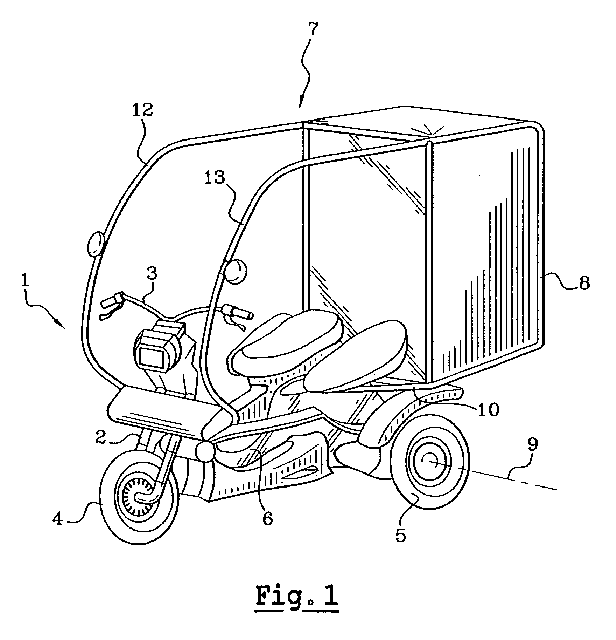

En faisant référence à la figure 1, un tricycle à moteur 1, du type sur lequel l'invention est destinée à être adaptée, est représenté.

La fourche avant 2 est montée sur une partie avant du châssis du tricycle à moteur 1 de manière à être dirigée vers la droite ou vers la gauche par un guidon 3.

Une roue avant 4 est fixée aux extrémités inférieures de la fourche avant 2.

Un système de puissance d'entraînement ayant notamment un moteur, un boîtier de transmission ainsi que deux roues est monté à l'arrière du tricycle à moteur.

Seule une des deux roues arrières 5 du système de puissance d'entraînement est visible à la figure 1.

Un corps 6 formé de préférence en résine synthétique couvre le châssis du tricycle à moteur 1.

Le tricycle à moteur 1 montré à la figure 1 est doté du dispositif fonctionnel 7.

La partie arrière du dispositif fonctionnel 7 du tricycle à moteur forme une nacelle 8 destinée à stocker la marchandise pour son transport.

La nacelle 8 a une forme parallélépipédique de sorte à optimiser le volume de stockage et est disposée de préférence en porte-à-faux par rapport à l'axe 9 des deux roues arrières du triporteur 1.

La nacelle 8, en porte-à-faux par rapport à l'axe 9 des roues arrières du tricycle à moteur 1, est tout d'abord fixée rigidement sur la partie arrière du châssis du tricycle à moteur par l'intermédiaire de barres de liaison.

Deux barres de liaison sont en fait mises en oeuvre dans l'exemple de la figure 1, soit une pour chaque côté de la nacelle 8, mais seules la barre de liaison 10 est visible.

Les barres de liaison permettent de solidariser la partie inférieure de la nacelle 8 à la partie arrière du châssis du tricycle à moteur.

Une des extrémités de chaque barre de liaison est donc fixée solidairement sur la partie inférieure de la nacelle 8 de préférence par soudage ou par tout autre moyen de fixation tandis que l'autre extrémité est boulonnée sur la partie arrière du châssis du tricycle à moteur 1.

D'autres systèmes de fixation que le système boulon-écrou peuvent être bien sûr envisagés.

D'autre part, la nacelle 8 du dispositif fonctionnel de tricycle à moteur est également fixée rigidement sur la partie avant du châssis du triporteur par l'intermédiaire de deux barres de retour de force 12 et 13 de forme générale en « U ».

Les deux barres de retour de force 12 et 13 ont chacune une extrémité fixée solidairement à la partie supérieure de la nacelle 8, tandis que leur autre extrémité est boulonnée sur la partie avant du châssis du tricycle à moteur 1.

De façon avantageuse, les deux barres de retour de force 12 et 13, qui permettent de fixer la partie supérieure de la nacelle 8 à la partie avant du châssis du tricycle à moteur, peuvent former un toit pour le tricycle à moteur.

Dans ce cas, une plaque en plexiglas par exemple, ou tout autre matériau translucide, est installée entre les deux barres de retour de force 12 et 13 en guise de pare-brise.

Ainsi, l'utilisateur se retrouve protégée des intempéries éventuelles.

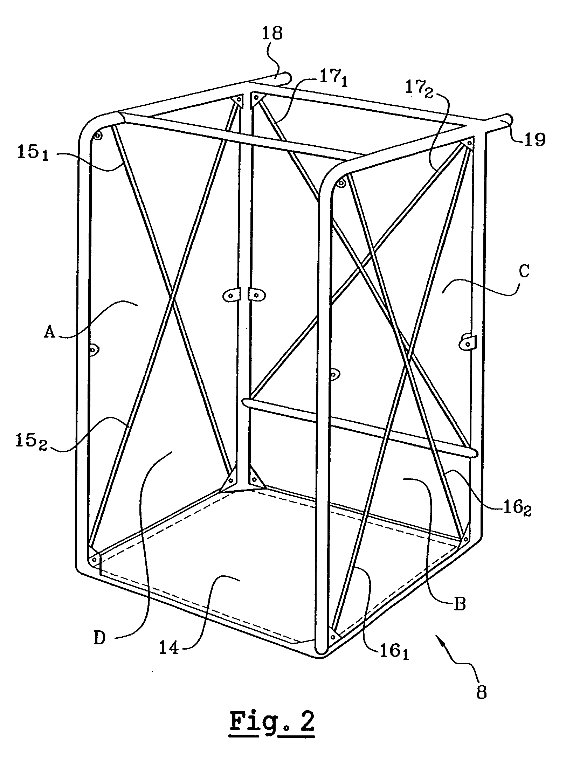

La figure 2 montre une vue en perspective détaillée de la partie arrière du dispositif fonctionnel de tricycle à moteur selon l'invention constituant la nacelle 8.

La nacelle 8 est formée d'une structure de support. La structure de support est constituée de tubes assemblés solidairement les uns aux autres par soudage ou par tout autre moyen de fixation, de manière à former un un parallélépipède rectangle. Les tubes constituant la nacelle peuvent être en matériau métallique (aluminium, acier. . .) ou plastique.

Le fond de la nacelle 8 est constituée d'une grille 14 qui peut être par exemple formée par une tôle perforée, permettant ainsi un écoulement par le fond de la nacelle.

La grille de fond 14 de la nacelle 8 est fixée solidairement à la structure de support métallique par soudage de préférence ou par tout autre moyen équivalent.

Les faces A, B et C de la structure de support métallique sont dotées chacune de deux entretoises respectivement 15₁ et 15₂, 16₁ et 16₂, 17₁ et 17₂ qui sont fixées solidairement à la structure, par soudage ou tout autre moyen de fixation, selon les diagonales de chaque face.

Ces entretoises permettent ainsi de maintenir un écartement constant tout en améliorant la résistance de la structure.

Quant à la face D qui correspond à l'arrière de la nacelle, elle est dotée de moyens non représentés tels que des sangles destinées à empêcher les conteneurs de marchandises stockées dans la nacelle 8 de glisser vers l'arrière et de tomber lors de leur transport.

La face avant C de la nacelle 8 comprend dans sa partie supérieure des moyens d'assemblage 18 et 19 pour fixer solidairement les deux barres de retour de force, respectivement 12 et 13, à la partie supérieure de la nacelle 8.

De façon avantageuse, les moyens d'assemblages 18 et 19 peuvent être constitués de douilles de type mâle. Chacune des deux douilles 18 et 19 est alors fixée solidairement, de préférence par soudage, aux coins supérieurs de la face avant C de la structure de support, de façon à pouvoir y emmancher et visser les deux barres de retour de force 12 et 13 qui sont alors constituées de tubes creux.

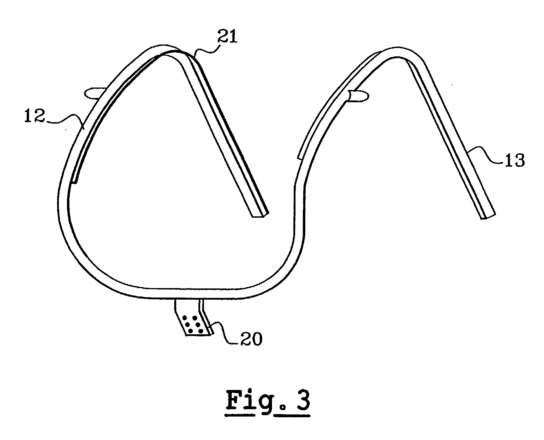

La figure 3 illustre justement la partie avant du dispositif fonctionnel de tricycle à moteur selon l'invention destinée à être assemblé solidairement avec la nacelle 8.

La partie avant du dispositif comprend donc les deux barres de retour de force 12 et 13, de forme générale en « U », qui sont formées de préférence en matériau métallique ou plastique. Les deux barres se rejoignent en leur extrémité inférieure et sont assemblées ensemble, par soudage par exemple.

La partie avant du dispositif fonctionnel comprend également des moyens de fixation 20.

Les moyens de fixation 20 comprennent une plaque solidaire des deux barres 12 e 13 destinée à assurer la fixation du dispositif sur la partie avant du châssis du tricycle à moteur.

La fixation est mise en oeuvre de préférence par un système de boulons et d'écrous ou par tout autre moyen.

La partie avant du dispositif peut former de façon avantageuse un toit pour le triporteur.

Des moyens d'assemblage 21 sont alors prévus le long de chacune des barres 12 et 13 de façon à pouvoir accueillir une plaque de plexiglas formant un pare-brise. Les moyens d'assemblage 21 comprennent une glissière dotée d'un joint, non représenté, fixée solidairement le long de chacune des barres de retour de force 12 et 13, par soudage par exemple, sur une longueur suffisante pour protéger efficacement l'utilisateur.

Le dispositif fonctionnel de tricycle à moteur selon l'invention permet donc de mettre en oeuvre une nacelle de stockage avec un volume important pour le transport des marchandises, la nacelle pouvant alors être diposée en porte-à-faux par rapport à l'axe des roues arrières du tricycle à moteur. En effet, le système de fixation originale du dispositif avec deux barres de retour de force solidarisant la partie supérieure de la nacelle à l'avant du châssis du tricycle à moteur permet de pouvoir augmenter de façon importante les dimensions de la nacelle, notamment en hauteur et en longueur, sans aucun risque de déséquilibrer le tricycle à moteur.

De plus, de façon avantageuse, la partie avant du dispositif qui assure la fixation rigide du dispositif à l'avant du châssis du tricycle à moteur peut faire en même temps office de toit pour le tricycle à moteur.

## Revendications

1. Dispositif de transport de marchandises **caractérisé en ce qu'**il comprend un tricycle à moteur (1), une nacelle (8) pour stocker de la marchandise, ladite nacelle (8) étant fixée rigidement d'une part, à l'arrière du châssis du tricycle à moteur (1) par l'intermédiaire de barres de liaison (10) et, d'autre part, à l'avant du châssis du tricycle à moteur (1) par l'intermédiaire de deux barres de retour de force (12, 13).

2. Dispositif selon la revendication 1, **caractérisé en ce que** la nacelle (8) est formée par une structure de support constituée de tubes assemblés solidairement les uns aux autres de façon à former un parallélépipède rectangle.

3. Dispositif selon la revendication 1 ou 2 **caractérisé en ce que** la nacelle (8) est disposée en porte-à-faux par rapport à l'axe (9) des roues arrières du tricycle à moteur (1).

4. Dispositif selon l'une des revendications précédentes, **caractérisé en ce que** les barres de liaison (10) sont fixées solidairement d'une part, à l'arrière du châssis du tricycle à moteur et, d'autre part, à la partie inférieure de la nacelle (8).

5. Dispositif selon l'une des revendications précédentes, **caractérisé en ce que** les barres de retour de force (12, 13) sont fixées solidairement d'une part, à l'avant du châssis du tricycle à moteur et, d'autre part, à la partie supérieure de la nacelle (8) par l'intermédiaire de moyens d'assemblage (18, 19).

6. Dispositif selon la revendication 5, **caractérisé en ce que** les moyens d'assemblage (18, 19) pour assembler solidairement la partie supérieure de la nacelle (8) aux barres de retour de force (12, 13) comprennent des douilles de type mâle, chacune des douilles (18, 19) étant fixée solidairement aux coins supérieurs de la face avant (C) de la nacelle (8), lesdites barres de retour de force étant alors constituées de tubes creux.

7. Dispositif selon l'une des revendications précédentes, **caractérisé en ce que** les deux barres de retour de force (12, 13) comprennent des moyens (21) pour accueillir un pare-brise de façon à former un toit pour le tricycle à moteur.

8. Dispositif selon la revendication 8, **caractérisé en ce que** les moyens (21) pour accueillir un pare-brise comprennent une glissière dotée d'un joint fixée solidairement le long de chacune des barres de retour de force (12, 13).

9. Dispositif selon les revendications 7 ou 8, **caractérisé en ce que** le pare-brise est constitué d'une plaque en plexiglas.

10. Dispositif selon l'une des revendications précédentes, **caractérisé en ce que** les tubes constituant la nacelle (8) et les barres de retour de force (12, 13) sont en matériau métallique ou plastique.
